## Europäisches Patentamt
## European Patent Office
## Office européen des brevets

(19)

(11) Veröffentlichungsnummer: **0 118 845**

**B1**

(12) **EUROPÄISCHE PATENTSCHRIFT**

(45) Veröffentlichungstag der Patentschrift:
01.07.87

(51) Int. Cl.⁴: **B 25 J 13/00,** B 25 J 9/00

(21) Anmeldenummer: **84102182.7**

(22) Anmeldetag: **01.03.84**

(54) **Arbeitsgerät zum Bewegen von Gegenständen.**

(30) Priorität: **10.03.83 DE 3308475**

(43) Veröffentlichungstag der Anmeldung:
**19.09.84 Patentblatt 84/38**

(45) Bekanntmachung des Hinweises auf die Patenterteilung:
**01.07.87 Patentblatt 87/27**

(84) Benannte Vertragsstaaten:
**AT BE CH FR GB IT LI NL SE**

(56) Entgegenhaltungen:
**DE-A-2 945 189
DE-A-3 034 912
GB-A-2 061 872**

(73) Patentinhaber: **Schlimm, Norbert, Angerburger Allee 4c, D-1000 Berlin 19 (DE)**

(72) Erfinder: **Schlimm, Norbert, Angerburger Allee 4c, D-1000 Berlin 19 (DE)**

(74) Vertreter: **Jochem, Bernd, Dipl.- Wirtsch.- Ing., Patentanwälte Beyer & Jochem Postfach 17 41 09, D-6000 Frankfurt/Main (DE)**

LIBER, STOCKHOLM 1987

## Beschreibung

Die Erfindung betrifft ein Arbeitsgerät zum Bewegen von Gegenständen, wie z. B. Werkstücken oder Arbeitswerkzeugen, bestehend aus einem Grundrahmen, einem daran gelagerten, durch einen am Grundrahmen montierten ersten Antriebsmotor um eine erste Grundachse drehbaren ersten Armteil, einem daran gelagerten, durch einen am Grundrahmen montierten zweiten Antriebsmotor über einen Ketten- oder Riementrieb um eine rechtwinklig zur ersten angeordnete zweite Grundachse drehbaren zweiten Armteil, einem daran gelagerten, durch einen am Grundrahmen montierten dritten Antriebsmotor über einen Ketten- oder Riementrieb um eine zur zweiten parallele dritte Grundachse drehbaren dritten Armteil sowie einer daran gelagerten Halterung für die zu bewegenden Gegenstände, welche mit einem um eine erste Handachse drehbaren ersten Handteil und einem daran um eine zweite Handachse drehbar gelagerten zweiten Handteil verbunden ist.

Bei bekannten Arbeitsgeräten sind die Motoren und Getriebe zur Bewegung des zweiten und dritten Armteils an den beweglichen Armteilen angebracht. Das hat die doppelt negative Folge, daß erstens die zu beschleunigende träge Masse um die Masse dieser Motoren und Getriebe vergrößert ist und zweitens wegen des neben der Nutzlast zu berücksichtigenden Gewichts der Antriebsmotoren und Getriebe auch die Armteile entsprechend kräftig und schwer ausgebildet werden müssen, was sich auch wieder in schlechterer Beschleunigung oder der Notwendigkeit noch stärkerer und schwererer Motoren äußert.

Zur Beseitigung dieses Nachteils ist es durch die DE-A1-29 45 189 und die DE-A1-30 34 912 bekannt, die Arm- und Handteile durch am Grundrahmen montierte Antriebsmotoren über Ketten- oder Riementriebe anzutreiben. Dazu werden im einen Fall die Ketten- oder Riemen über koaxial zur ersten Grundachse drehbar gelagerte Kettenräder bzw. Riemenscheiben geführt. Da die zweite und dritte Grundachse senkrecht zur ersten Grundachse liegen, ergeben sich Schwierigkeiten bei der Überleitung der Ketten- oder Riemen von den Kettenrädern bzw. Riemenscheiben auf der ersten Grundachse zu den Kettenrädern bzw. Riemenscheiben auf der zweiten Grundachse, insbesondere können die letzteren nicht unmittelbar neben der ersten Grundachse gelagert werden. Bei der zuletzt genannten Vorveröffentlichung werden stattdessen die Ketten bzw. Riemen parallel zur ersten Grundachse aus dem Grundrahmen heraus auf die Kettenräder bzw. Riemenscheiben am ersten Armteil geführt, mit der Folge, daß sie sich bei dessen Drehung schraubenförmig verdrillen, so daß nur eine begrenzte Drehbewegung möglich ist.

Der Erfindung liegt daher die Aufgabe zugrunde, ein Arbeitsgerät der eingangs genannten Art zu schaffen, bei welchem ein günstiges Verhältnis von Tragfähigkeit zu Eigengewicht, verbunden mit unbegrenzter Drehbarkeit relativ zum Grundrahmen bei geringer fester Auskragung erreicht wird.

Vorstehende Aufgabe wird erfindungsgemäß dadurch gelöst, daß die Ketten- oder Riementriebe des zweiten und dritten Armteils über koaxial zur ersten Grundachse angeordnete Gelenke mit Zahnstangen verbunden sind, welche durch die Antriebsmotoren linear bewegbar sind.

Durch die Erfindung wird erreicht, daß die Ketten oder Riemen insgesamt die Drehbewegungen um die erste Grundachse mitmachen, also an dieser weder umgelenkt noch verdrillt zu werden brauchen. Vom festen Grundrahmen kommend, können sie sofort auf Kettenräder bzw. Riemenscheiben auflaufen, die unmittelbar neben der ersten Grundachse auf der zweiten Grundachse gelagert sind. Damit ergibt sich ein optimal kleiner Abstand zwischen der ersten und zweiten Grundachse und daher eine entsprechend kleine feste Auskragung mit der weiteren vorteilhaften Folge eines geringen Platzbedarfs und schneller Drehbewegungen bei angezogenem Arm. Die vorgeschlagenen Gelenke gestatten Drehbewegungen relativ zum Grundrahmen um beliebige Drehwinkel.

Besonders günstige Verhältnisse ergeben sich, wenn bei bestimmten Anwendungsfällen, wie z. B. dem Be- und Entladen von in Reihen auf Paletten gestapelten Gegenständen, einen bestimmte Ausrichtung der Gegenstände beibehalten werden soll. Dann braucht man zwar auch Drehbewegungen um Handachsen, kann jedoch die sonst erforderlichen Antriebsmotoren für die Bewegungen um die Handachsen ebenfalls durch Ketten- oder Riementriebe ersetzen, welche die um die Handachsen drehbaren Teile der Halterung mit bestimmten Arm- bzw. Rahmenteilen verbinden. Auf diese Weise befindet sich überhaupt kein Bewegungsantrieb mehr an den beweglichen Teilen des Arms.

Die Erfindung wird nachstehend anhand eines in der Zeichnung dargestellten Ausführungsbeispiels näher erläutert. Es zeigen:

Fig. 1 eine vereinfachte perspektivische Darstellung, z.T. im Schnitt, eines Arbeitsgeräts gemäß der Erfindung;

Fig. 2 ebenfalls in perspektivischer Darstellung das Gerät nach Fig. 1, von der anderen Seite aus gesehen.

Das gezeigte Arbeitsgerät hat einen Grundrahmen 10, der fest am Boden verankert werden kann. Auf dem Grundrahmen ist ein erstes Armteil 12 um eine mittlere senkrechte Achse des Grundrahmens drehbar gelagert. Für diese Drehbewegung ist ein erster Antriebsmotor 14 am Grundrahmen 10 montiert, der über ein sogenanntes Cyclogetriebe und ein Ritzel 16 ein drehfest mit dem Armteil 12 verbundenes Zahnrad 18 antreibt.

Am ersten Armteil 12 ist auf einer Achse 20 ein zweites Armteil 22 gelagert. Mit diesem ist ein koaxial angeordnetes Rad 24 drehfest verbunden. Außerdem sind auf der Achse 20 zwei weitere Räder 26 und 28 frei drehbar gelagert. Um den größten Teil des Umfangs des Rads 24 kann sich eine Kette 30 legen, die mit ihrem äußeren Ende am Umfang des Rads 24 befestigt ist. Das entgegengesetzte Ende der Kette 24 ist über ein Drehgelenk 32 mit einer Zahnstange 34 verbunden, in die das Abtriebsritzel 36 eines zweiten Antriebsmotors 38 mit angebautem Cyclogetriebe eingreift. Mittels der Motor-Getriebeeinheit 38 wird die Zahnstange 34 auf- und abbewegt.

Sie nimmt über das Drehgelenk 32 die Kette 30 mit, und da deren äußeres Ende teilweise um den Umfang des Rads 24 gelegt und dort auch befestigt ist, wird die gradlinige Bewegung der Zahnstange 34 in eine Drehbewegung des Rads 24 und des mit diesem verbundenen zweiten Armteils 22 umgewandelt.

Das äußere Ende des zweiten Armteils 22 trägt eine Achse 40, auf welcher ein drittes Armteil 41, welches fest mit Rädern 42, 44 verbunden ist, gelagert ist. Ketten 46 und 48, z. B. sogenannte Flyerketten, wie sie bei Gabelstaplern Verwendung finden, sind mit ihren äußeren Enden am Umfang der Räder 42 bzw. 44 festgelegt, über einen Teil des Umfangs dieser Räder geführt, über die frei drehbar auf der Achse 20 sitzenden Räder 26 bzw. 28 gelegt und unmittelbar neben der senkrechten Drehachse des ersten Armteils 12 von oben in den Grundrahmen 10 hineingeführt, wo sie über ein Drehgelenk 50 mit einer oder zwei Zahnstangen 52 in Längsrichtung fest verbunden sind, in die ein Abtriebsritzel 54 eines ebenfalls mit einem Cyclogetriebe verbundenen dritten Antriebsmotors 56 eingreift. Mittels dieses Motors und der durch die Zahnstangen 52 und Ketten 46, 48 gebildeten Transmission kann das dritte Armteil 41 um die Achse 40 verschwenkt werden.

Es ist ersichtlich, daß sämtliche Antriebsmotoren 14, 38 und 56 für die Bewegungen der drei Armteile 12, 22 und 41 stationär gelagert sind und daher weder den Arm belasten noch die Beschleunigungswerte der Armbewegungen negativ beeinflussen.

Am freien Ende des dritten Armteils 41 befindet sich eine erste Handachse 58, die parallel zu den beiden Achsen 20 und 40, also im Beispielsfall horizontal angeordnet ist. Ein erstes Handteil 60 ist relativ zum Armteil 41 drehbar auf der Achse 58 gelagert. Ein zweites Handteil 62 ist am ersten Handteil 60 relativ zu diesem um eine angedeutete senkrechte Achse 63 drehbar gelagert. Mit dem zweiten Handteil 62 kann z. B. ein nicht gezeigter Greifer für Werkstücke verbunden sein.

Wenn mit dem gezeigten Arbeitsgerät Gegenstände in Reihen geordnet abgesetzt oder derart ausgerichtete Gegenstände aufgenommen werden sollen, müssen die Antriebe für das erste und zweite Handteil 60, 62 Bewegungen der Armteile kompensieren, um Drehbewegungen der Handteile um die Handachsen 58 und 62 relativ zum ersten Armteil 12 bzw. dem Grundrahmen 10 zu vermeiden. Anstelle entsprechend gesteuerter Antriebe, die normalerweise am äußeren Ende des Gelenkarms zu montieren wären, hat das gezeigte Arbeitsgerät leichte Transmissionen, welche den selben Zweck mit einfacheren Mitteln erreichen.

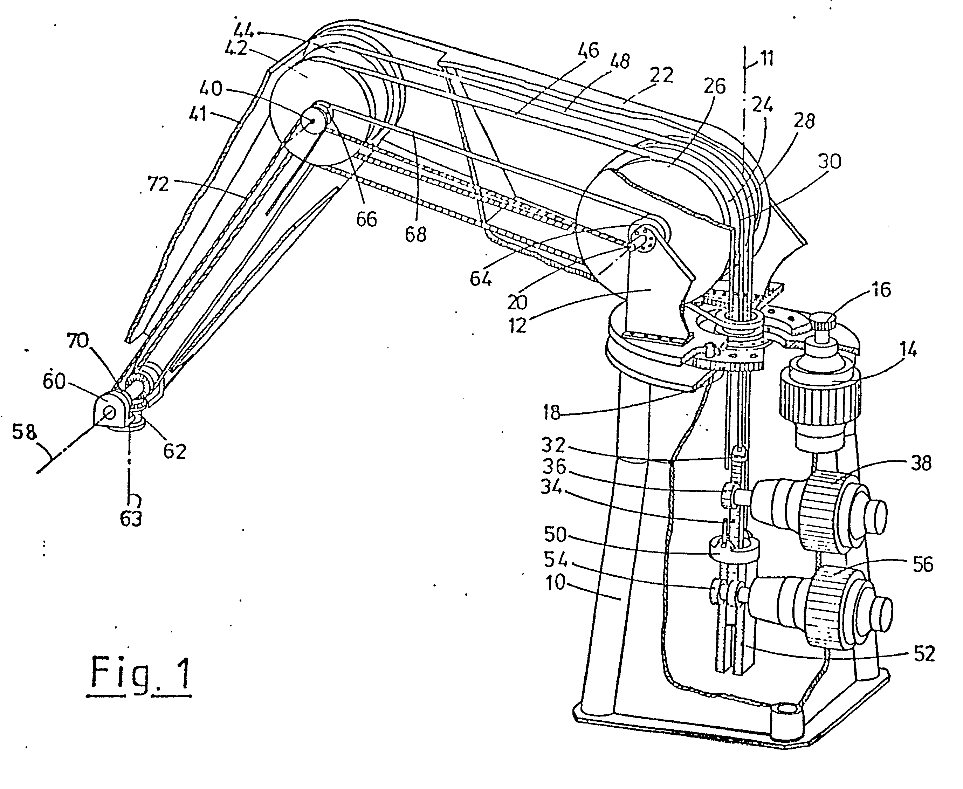

Die Führung des ersten Handteils 60 ist aus Fig. 1 ersichtlich. Wie dort gezeigt, sitzt auf der mit 20 bezeichneten zweiten Grundachse ein Rad 64, welches relativ zum ersten Armteil 12 undrehbar gehalten ist. Auf der dritten Grundachse 40 sind zwei Räder 66 gelagert, die fest miteinander verbunden sind. Zwischen dem Rad 64 und einem der beiden Räder 66 erstreckt sich z. B. eine in sich geschlossene Kette 68. Ein weiteres Rad 70 sitzt auf der ersten Handachse 58 und ist undrehbar mit dem ersten Handteil 60 verbunden. Über das andere der beiden Räder 66 und das Rad 70 läuft eine weitere in sich geschlossene Kette 72. Die Übersetzung des Kettentriebs 64-72 ist insgesamt 1:1, so daß unabhängig von Schwenkbewegungen des zweiten Armteils 22 um die zweite Grundachse 20 und des dritten Armteils 41 um die dritte Grundachse 10 das erste Handteil 60 mit Bezug auf die Achse 58 undrehbar gehalten wird. Im Beispielsfall behält das erste Handteil 60 in allen Stellungen des Schwenkarms 12, 22, 41 diejenige Stellung bei, in welcher die zweite Handachse 63 parallel zur ersten Grundachse, d.h. zur Drehachse des ersten Armteils 12, senkrecht steht.

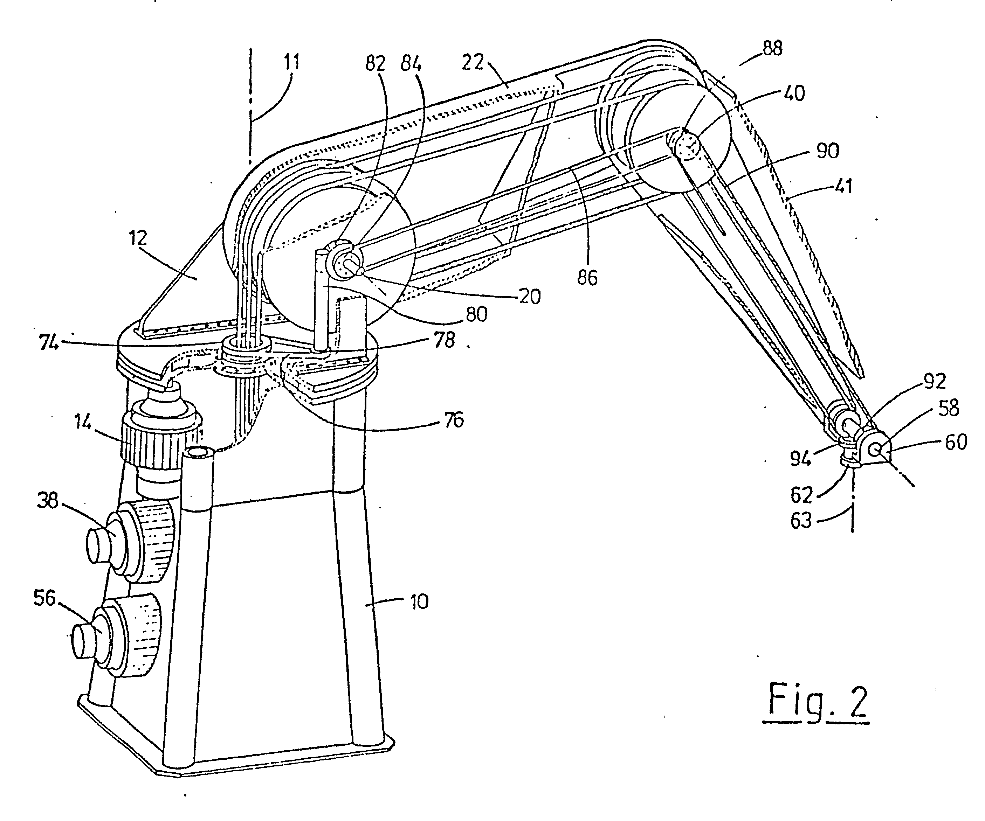

Um Drehbewegungen des ersten Armteils 12 um die bei 11 angedeutete erste Grundachse am zweiten Handteil 62 zu kompensieren, ist gemäß Fig. 2 zwischen dem letzteren und dem Grundrahmen 10 eine weitere Transmission angeordnet. Diese besteht aus einem drehfest am Grundrahmen 10 festgelegten Zahnrad 74, einem Zahnriemen oder einer Kette 76, welche das Zahnrad 74 mit einem am ersten Armteil 12 um eine zur Grundachse 11 parallele Achse drehbar gelagerten Zahnrad 78 verbindet, einer drehfest mit letzterem verbundenen Schnecke 80, die mit einem entsprechenden Schneckenrad 82 in Eingriff steht, welches drehbar auf der zweiten Grundachse 20 gelagert und drehfest mit einem Rad 84 verbunden ist, das seinerseits über einen Riemen oder eine Kette 86 mit einem von zwei nebeneinander auf der dritten Grundachse 40 gelagerten, drehfest miteinander verbundenen Rädern 88 verbunden ist. Das andere der beiden Räder 88 steht über einen Riemen oder eine Kette mit einem auf der ersten Handachse 58 gelagerten Rad 92 in Verbindung, dessen Drehbewegung über ein Kegelradpaar 94 auf das zweite Handteil 62 übertragen wird. Wenn die Übersetzung der vorstehend genannten Transmission zwischen dem Zahnrad 74 und dem zweiten Handteil 62 insgesamt 1:1 beträgt, hält das ortsfest verankerte Zahnrad 74 auch das zweite Handteil 62 relativ zur zweiten Handachse 63 undrehbar fest, so daß ein mit dem zweiten Handteil 62 verbundener Greifer oder eine sonstige Halterung in allen Stellungen des Gelenkarms 12, 22, 41 seine Ausrichtung mit Bezug auf den Grundrahmen 10 beibehält und mit Bezug auf diesen nur eine Parallelverschiebung erfährt.

Die oben beschriebenen Transmissionen für die Antriebe des zweiten und dritten Armteils sowie der Handteile können Zahnriemen- oder Kettentriebe sein, wobei in sich geschlossene, endlose Zahnriemen bzw. Ketten über Zahnriemenscheibe bzw. Zahnräder geführt sind und mittels der Zähne formschlüssig mit diesen in Eingriff sind. Alternativ können zahnlose Riemen- oder Kettentriebe Verwendung finden, bei denen endliche Riemen- oder Kettenstränge mit ihren Enden z. B. mittels Schrauben oder Nieten, auf dem Umfang des treibenden und des angetriebenen Rades festgelegt sind. Diese Möglichkeit besteht deshalb, weil in den meisten Fällen nur Drehwinkel von weniger als 360° gebraucht werden. Unter den im gezeichneten Ausführungsbeispiel gegebenen Voraussetzungen braucht nur das Rad 78 eine normale Zahnriemenscheibe bzw. ein Zahnrad zu sein, an welchem der Zahnriemen 76 bzw. eine Kette nicht festgelegt sein darf, weil sich nur dieses Rad 78 um mehr als 360° drehen muß.

Um bei der genannten Transmissionsart mit an den Enden auf dem Umfang von Rädern festgelegten Riemen- oder Kettensträngen in beiden Drehrichtungen Drehmomente zu übertragen, werden jeweils zwei Riemen- oder Kettenstränge nebeneinander angeordnet, deren Enden in entgegengesetzter Richtung um ein doppelt breites Rad oder zwei drehfest verbundene Räder geschlungen sind. Damit lassen sich je nach Umschlingungswinkel in beiden Drehrichtungen Drehwinkel bis fast 360° erreichen. Meistens genügen jedoch 270°. Bei Drehwinkeln bis zu etwa 180° könnten auch in sich geschlossene, endlose Riemen oder Ketten verwendet werden, die jeweils an einer Stelle am Umfang einerseits des treibenden und andererseits des angetriebenen Rades festgelegt sind.

## Patentansprüche

1. Arbeitsgerät zum Bewegen von Gegenständen, wie z. B. Werkstücken oder Arbeitswerkzeugen, bestehend aus einem Grundrahmen (10), einem daran gelagerten, durch einen am Grundrahmen (10) montierten ersten Antriebsmotor (14) um eine erste Grundachse (11) drehbaren ersten Armteil (12), einem daran gelagerten, durch einen am Grundrahmen (10) montierten zweiten Antriebsmotor (38) über einen Ketten- oder Riementrieb (24, 30) um eine rechtwinklig zur ersten angeordnete zweite Grundachse (20) drehbaren zweiten Armteil (22), einem daran gelagerten, durch einen am Grundrahmen (10) montierten dritten Antriebsmotor (56) über einen Ketten- oder Riementrieb (26, 28, 42-48) um eine zur zweiten parallele dritte Grundachse (40) drehbaren dritten Armteil (41) sowie einer daran gelagerten Halterung für die zu bewegenden Gegenstände, welche mit einem um eine erste Handachse (58) drehbaren ersten Handteil (60) und einem daran um eine zweite Handachse (63) drehbar gelagerten zweiten Handteil (62) verbunden ist, dadurch gekennzeichnet, daß die Ketten- oder Riementriebe (24, 30; 26, 28, 42-48) des zweiten und dritten Armteils (22; 41) über koaxial zur ersten Grundachse (11) angeordnete Gelenke (32; 50) mit Zahnstangen (34; 52) verbunden sind, welche durch die Antriebsmotoren (38; 56) linear bewegbar sind.

2. Arbeitsgerät nach Anspruch 1, dadurch gekennzeichnet, daß das erste Handteil (60) durch einen Ketten- oder Riementrieb (64-72) mit dem ersten Armteil (12) verbunden und mit Bezug auf die erste Handachse (58) drehfest gehalten ist.

3. Arbeitsgerät nach Anspruch 2, dadurch gekennzeichnet, daß der Ketten- oder Riementrieb (64-72) aus einem drehfest mit dem ersten Armteil (12) verbundenen, auf der zweiten Grundachse (20) angeordneten ersten Rad (64), einem drehfest mit dem ersten Handteil (60) verbundenen, auf der ersten Handachse (58) angeordneten zweiten Rad (70) und einem über Zwischenräder (66) auf der dritten Grundachse (40) geführten Riemen bzw. einer Kette (68, 72) mit einem Übersetzungsverhältnis von 1:1 zwischen dem ersten und dem zweiten Rad (64, 70) besteht.

4. Arbeitsgerät nach einem der Ansprüche 1 bis 3, dadurch gekennzeichnet, daß das zweite Handteil (62) durch einen Ketten- oder Riementrieb (74-94) mit dem ortsfesten Grundrahmen (10) verbunden und mit Bezug auf die zweite Handachse (63) drehfest gehalten ist.

5. Arbeitsgerät nach Anspruch 4, dadurch gekennzeichnet, daß der Ketten- oder Riementrieb (74-94) aus einem drehfest mit dem Grundrahmen (10) verbundenen, auf der ersten Grundachse (11) angeordneten dritten Rad (74), einem drehfest mit dem zweiten Handteil (62) verbundenen, auf der zweiten Handachse (63) angeordneten vierten Rad (94) und einem über Winkeltriebe (80, 82; 94) und Zwischenräder (84, 88) auf der zweiten und dritten Grundachse (20, 40) geführten Riemen bzw. einer Kette (76, 86, 90) mit einem Übersetzungsverhältnis von 1:1 zwischen dem dritten und dem vierten Rad (74, 94) besteht.

## Claims

1. Working apparatus for the moving of articles such as e.g. workpieces or tools, comprising a base frame (10), a first arm part (12) mounted thereon and movable pivotally about a first axis (11) by a first driving motor (14) mounted on the base frame (10), a second arm part (22) which is mounted on said first arm part and is movable pivotally about a second axis (20) situated at right angles to the first through the agency of a chain or belt drive (24, 30) by a second driving motor (38) mounted on the base frame (10), a third arm part (41) which is mounted on the said second arm part and is movable pivotally about a third axis (40) situated parallel to the second axis through the agency of a chain or belt drive (26, 28, 42-48) by a third driving motor (56) mounted on the base frame (10), and also a holding device for the articles to be moved which is mounted on said third arm part and is connected with a first hand part (60) pivotable about a first hand axis (58) and with a second hand part (62) mounted to be pivotable about a second hand axis (63), characterised in that the chain or belt drives (24, 30; 26, 28, 42-48) of the second and third arm parts (22; 41) are connected, via articulation joints (32; 50) situated coaxially with respect to the first axis (11), to toothed racks (34; 52) which are movable linearly by the driving motors (38; 56).

2. Working apparatus according to claim 1, characterised in that the first hand part (60) is connected by a chain or belt drive (64-72) to the first arm part (12), and is held secured against rotational movement relatively to the first hand axis (58).

3. Working apparatus according to claim 2, characterised in that the chain or belt drive (64-72) consists of a first wheel (64) connected in rotationally rigid manner with the first arm part (12) and arranged on the second axis (20), a second wheel (70) which is connected to the first hand part (60) so as to be rotationally rigid therewith and arranged on the first hand axis (58), and of a belt or chain (68, 72) guided over intermediate wheels (66) on the third axis (40) and with a transmission ratio of 1:1 between the first and second wheels (64, 70).

4. Working apparatus according to one of claims 1 to 3, characterised in that the second hand part (62) is connected to the stationary base frame (10) by a chain or belt drive (74-94), and is held fast against rotational movement relatively to the second hand axis (63).

5. Working apparatus according to claim 4, characterised in that the chain or belt drive (74-94) consists of a third wheel (74) connected in rotationally rigid manner with the base frame (10) and situated on the first axis (11), of a fourth wheel (94) connected in rotationally rigid manner to the second hand part (62) and situated on the second hand axis (63), and of a belt or chain (76, 86, 90) which is guided over angle drive elements (80, 82; 94) and intermediate wheels (84, 88) on the second and third axes (20, 40), with a transmission ratio of 1:1 between the third and the fourth wheel (74, 94).

## Revendications

1. Outillage pour mouvoir des objets, par exemple des pièces à usiner ou des outils d'usinage, lequel comprend un bâti (10), un premier bras (12) pouvant pivoter autour d'un premier axe de base (11) sous la commande d'un premier moteur d'entraînement (14) monté sur le bâti (10), un second bras (22) pouvant pivoter autour d'un second axe de base (20) perpendiculaire au premier axe de base (11) sous la commande d'un second moteur d'entraînement (38) monté sur le bâti (10) et qui commande une transmission par chaînes ou courroies (24, 30), un troisième bras (41) pouvant pivoter autour d'un troisième axe de base (40) parallèle au second axe de base (20) sous la commande d'un troisième moteur d'entraînement (56) monté sur le bâti (10) et qui commande une transmission par chaînes ou courroies (26, 28 42-48), ainsi qu'un dispositif de support monté sur ce troisième bras (41) pour maintenir l'objet à mouvoir, ce dispositif étant relié à une première pièce à main (60) pouvant tourner autour d'un premier axe de manipulation (58) et à une seconde pièce à main (62) pouvant tourner autour d'un second axe de manipulation (63), cet outillage étant caractérisé par le fait que les transmissions par chaines ou courroies (24, 30; 26, 28 42-48) des second et troisième bras (22, 41) sont reliées par l'intermédiaire de joints articulés (32; 50) disposés coaxialement au premier axe de base (11) à des crémaillères (34; 52) qui sont entraînées de façon linéaire par les moteurs d'entraînement respectifs (38; 56).

2. Outillage selon la Revendication 1, caractérisé par le fait que la première pièce à main (60) est reliée au premier bras (12) par l'intermédiaire d'une transmission par chaînes ou courroies (64-72) et maintenue immobile en rotation par rapport au premier axe de manipulation (58).

3. Outillage selon la Revendication 2, caractérisé par le fait que la transmission par chaînes ou courroies (64-72) se compose d'une première roue (64) solidaire en rotation du premier bras (12) et coaxiale au second axe de base (20), d'une seconde roue (70) solidaire en rotation de la première pièce à main (60) et coaxiale au premier axe de manipulation (58), et de chaînes ou courroies (68; 72) guidées autour du troisième axe de base (40) par une roue intermédiaire (66), le rapport de transmission étant de 1:1 entre la première et la seconde roue (64; 70).

4. Outillage selon l'une quelconque des Revendications 1 à 3, caractérisé par le fait que la seconde pièce à main (62) est reliée par une transmission par chaînes ou courroies (74, 94) au bâti (10) et bloquée en rotation par rapport au second axe de manipulation (63).

5. Outillage selon la Revendication 4, caractérisé par le fait que la transmission par chaînes ou courroies (74, 94) se compose d'une troisième roue (74) solidaire du bâti (10) et coaxiale au premier axe de base (11), d'une quatrième roue (94) solidaire en rotation de la seconde pièce à main (62) et coaxiale au second axe de manipulation (63) et de courroies et chaînes (76, 86, 90) guidées autour d'un renvoi d'angle (80, 82; 94), et de roues intermédiaires (84, 88) tournant respectivement autour des premier et second axes de base (20, 40), avec un rapport de transmission de 1:1 entre les troisième et quatrième roues (74, 94).

Fig. 1

Fig. 2

0 118 845